# EUROPEAN PATENT APPLICATION

(11) **EP 1 926 281 A2**
(43) Date of publication of application: **28.05.2008**
(21) Application number: 07022578.4
(22) Date of filing: 21.11.2007
(51) Int. Cl.: H04L 29/06

(54) **Method and related apparatus for ciphering algorithm change in a wireless communications system**

(30) Priority: 21.11.2006 US 866849 P
(71) Applicant: Innovative Sonic Limited, Tortola (VG)
(72) Inventor: Kuo, Richard Lee-Chee, Peitou Taipei City (TW)
(74) Representative: Weber, Joachim

(57) **Abstract**

In order to ensure a successful inter-system handover, the present invention provides a method for ciphering algorithm change in a wireless communications system. The method includes allowing a ciphering algorithm of a user equipment to be changed during an inter-system handover (302), where the inter-system handover is preferably a handover from a GSM EDGE radio access network, abbreviated to GERAN, lu mode to a UMTS radio access network, abbreviated to UTRAN.

## Description

This application claims the benefit of U.S. Provisional Application No. 60/866,849, filed on Nov. 21, 2006 and entitled "METHOD AND APPARATUS FOR CIPHERING ALGORITHM CHANGE DURING HANDOVER FROM GERAN IU MODE IN A WIRELESS COMMUNICATION SYSTEM", the contents of which are incorporated herein by reference.

The present invention relates to a method for ciphering algorithm change in wireless communications systems and related devices according to the pre-characterizing clauses of claims 1 and 4.

The third generation (3G) mobile telecommunications system has adopted a Wideband Code Division Multiple Access (WCDMA) wireless air interface access method for a cellular network. WCDMA provides high frequency spectrum utilization, universal coverage, and high quality, high-speed multimedia data transmission. The WCDMA method also meets all kinds of QoS requirements simultaneously, providing diverse, flexible, two-way transmission services and better communication quality to reduce transmission interruption rates. To enhance transparency between different mobile systems for a mobile subscriber, Universal Mobile Telecommunications System (UMTS), one of the 3G technologies, provides a dual/multi mode function with which a user equipment (UE) can perform an inter-system handover, such as a handover between 2G and 3G systems.

A radio resource control (RRC) protocol specification, developed by the 3rd Generation Partnership Project (3GPP), specifies a handover from a GSM EDGE radio access network (GERAN) to a UMTS radio access network (UTRAN). During this handover, the UE needs to transit from a GERAN lu mode (ex. an RRC-Cell_Dedicated state) to an RRC connection mode (ex. a CELL_DCH state). An RRC entity of the GERAN exchanges RRC messages with the UE to obtain information of measurement results required for the handover, such as signal power of a Node-B. With the measurement results, the GERAN can initiate the inter-system handover according to determination of a radio resource management (RRM) algorithm. For simplicity, all handovers and inter-system handovers hereinafter are the handover from the GERAN lu mode to the UTRAN.

During the period the UE operates in the GERAN lu mode, the GERAN can initiate the handover by sending an INTERSYSTEM HANDOVER TO UTRAN COMMAND message on a downlink signaling radio bearer 2 (SRB2) in the GERAN lu mode. The INTERSYSTEM HANDOVER TO UTRAN COMMAND message is provided by the UTRAN and encapsulates an RADIO BEARER RECONFIGURATION message used for indicating to allow an integrity protection algorithm of the UE to be changed.

During the serving radio network subsystem relocation (SRNS relocation) or the inter-system handover involving the UE, the UTRAN can designate an integrity protection algorithm, such as UMTS integrity algorithm 1/2 (UIA1 /2), for the UE. An information element (IE) "Integrity Protection Mode" contained in the RADIO BEARER RECONFIGURATION message includes the designated integrity protection algorithm and is then sent from the UTRAN to indicate that the UE shall change its integrity protection algorithm to the designated one.

In addition, if the UTRAN requires the UE to change its ciphering algorithm, the UTRAN will set a designated ciphering algorithm, such as UMTS encryption algorithm 0/1 /2 (UEA0/1 /2), for an IE "Ciphering Mode" contained in the RADIO BEARER RECONFIGURATION message. However, the abovementioned change of ciphering algorithm can be performed only when the UE is involved with SRNS relocation.
In the prior art, the GERAN and UTRAN may use different ciphering algorithms. Thus, if the UE is not allowed to change its ciphering algorithm during the inter-system handover, the inter-system handover may fail and thereby breaks the connection between the UE and the network.

This in mind, the present invention aims at providing a method and apparatus for ciphering algorithm change during an inter-system handover in a wireless communications system, so as to prevent the inter-system handover from failing.

This is achieved by a method and apparatus for ciphering algorithm change in a wireless communications system according to the pre-characterizing clauses of claims 1 and 4. The dependent claims pertain to corresponding further developments and improvements.

As will be seen more clearly from the detailed description following below, a method for ciphering algorithm change in a wireless communications system comprises allowing a ciphering algorithm of a user equipment to be changed during an inter-system handover, where the inter-system handover is preferably a handover from a GSM EDGE radio access network (GERAN) lu mode to a UMTS radio access network (UTRAN).

In the following, the invention is further illustrated by way of example, taking reference to the accompanying drawings. Thereof
Fig. 1 is a functional block diagram of a communications device.
Fig. 2 is a diagram of the program code shown in Fig. 1.
Fig. 3 is a flowchart diagram of a process according to an embodiment of the present invention.

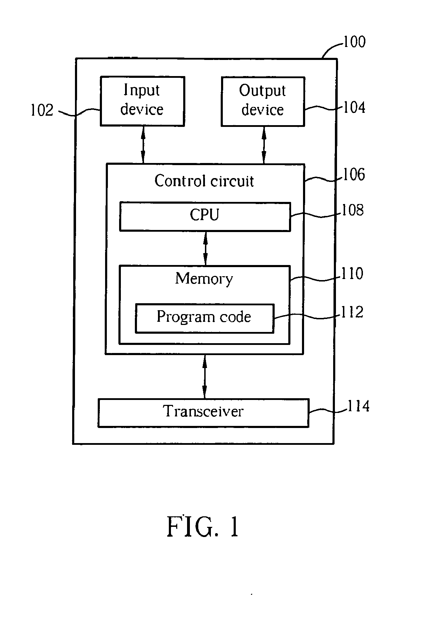

Please refer to Fig. 1, which is a functional block diagram of a communications device 100. For the sake of brevity, Fig. 1 only shows an input device 102, an output device 104, a control circuit 106, a central processing unit (CPU) 108, a memory 110, a program code 112, and a transceiver 114 of the communications device 100. In the communications device 100, the control circuit 106 executes the program code 112 in the memory 110 through the CPU 108, thereby controlling an operation of the communications device 100. The communications device 100 can receive signals input by a user through the input device 102, such as a keyboard, and can output images and sounds through the output device 104, such as a monitor or speakers. The transceiver 114 is used to receive and transmit wireless signals, delivering received signals to the control circuit 106, and outputting signals generated by the control circuit 106 wirelessly. From a perspective of a communications protocol framework, the transceiver 114 can be seen as a portion of Layer 1, and the control circuit 106 can be utilized to realize functions of Layer 2 and Layer 3. Preferably, the communications device 100 is utilized in both a second generation (2G) mobile communications system and a third generation (3G) mobile communications system.

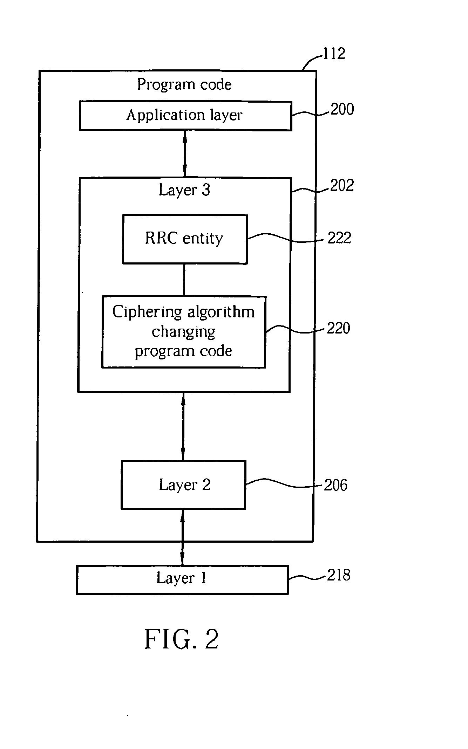

Please continue to refer to Fig. 2. Fig. 2 is a diagram of the program code 112 shown in Fig. 1. The program code 112 includes an application layer 200, a Layer 3 202, and a Layer 2 206, and is coupled to a Layer 1 218. The Layer 3 202 includes a radio resource control (RRC) entity 222, which is used for controlling the Layer 1 218 and the Layer 2 206 and performing peer-to-peer RRC communication with other communications devices.

The communications device 100 could be installed in a GSM EDGE radio access network (GERAN) or a UMTS radio access network (UTRAN) and communicates with a user equipment (UE). The communications device 100 can generate RRC messages and information elements (IE) containing configuration related to intersystem handovers. The RRC messages and IEs are sent on radio bearers so as to require the UE to perform an intersystem handover between a GERAN lu mode and the UTRAN.

Alternatively, the communications device 100 could be the UE that receives the RRC messages and IEs generated by the GERAN or the UTRAN for the intersystem handover between the GERAN and the UTRAN. In addition, according to communications environment or requirement from the network, the RRC entity 222 can change an RRC state of the communications device 100, such as an RRC-Cell_Dedicated state of a GERAN lu mode or a CELL_DCH state of an RRC connection mode.

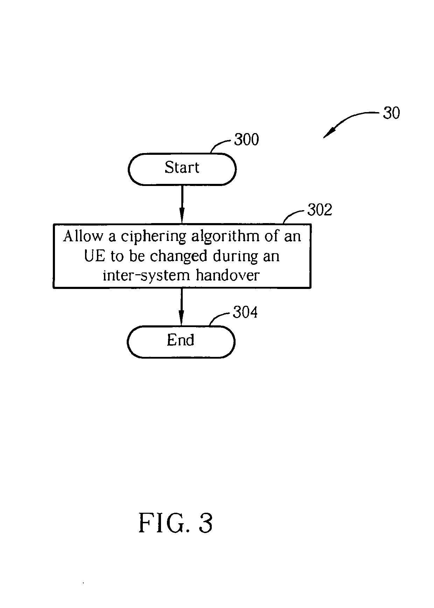

The embodiment of the present invention provides a ciphering algorithm changing program code 220 to prevent the inter-system handover from failing. Please refer to Fig. 3, which illustrates a schematic diagram of a process 30 according to an embodiment of the present invention. The process 30 is utilized for ciphering algorithm change in a wireless communications system, and can be compiled into the ciphering algorithm changing program code 220. The process 30 includes the following steps:
Step 300: Start.
Step 302: Allow a ciphering algorithm of an UE to be changed during an inter-system handover.
Step 304: End.

When the process 30 is applied to the inter-system handover from the GERAN lu mode to the UTRAN, the UTRAN can designate a ciphering algorithm, ex. UEA0/1 /2, for the UE during the inter-system handover. Preferably, the UTRAN supports the handover by providing the RADIO BEARER RECONFIGURATION message encapsulated in the INTERSYSTEM HANDOVER TO UTRAN COMMAND message transmitted by GERAN. In addition, the UTRAN utilizes an IE "Ciphering Mode", contained in the RADIO BEARER RECONFIGURATION message, to include the designated ciphering algorithm. When the UE receives the RADIO BEARER RECONFIGURATION message, the ciphering algorithm of the UE will be changed to the designated one if the ciphering algorithm of the UE and the designated one are different. For example, assume that the UE uses the UEA0 before the inter-system handover. During the inter-system handover, the UTRAN designates the UEA2 for the UE, and thereby the UE changes its ciphering algorithm, UEA0, to UEA2. The UE will start to use UEA2 after the inter-system handover.

In conclusion, the embodiment of the present invention allows the ciphering algorithm of the UE to be changed during the inter-system handover from the GERAN lu mode to the UTRAN to ensure the handover running successful.

## Claims

1. A method for ciphering algorithm change for a wireless communications system, the method comprising:
allowing a ciphering algorithm of a user equipment, called UE hereinafter, to be changed during an inter-system handover (302).

2. The method of claim 1, **characterized in that** the inter-system handover is a handover from a GSM EDGE radio access network, known as GERAN, lu mode to a UMTS radio access network, known as UTRAN.

3. The method of claim 1, **characterized in that** allowing the ciphering algorithm of the UE to be changed during the inter-system handover is changing the ciphering algorithm of the UE to a first ciphering algorithm designated by a network if the first ciphering algorithm is different from the ciphering algorithm of the UE.

4. A communications device (100) capable of detecting radio link failure for use in a wireless communications system, the communications device (100) comprising:
a control (106) circuit for realizing functions of the communications device (100);
a processor (108) installed in the control circuit (106), for executing a program code (112) to operate the control circuit (106); and
a memory (110) coupled to the processor (108) for storing the program code (112), the program code (112) comprising:
allowing a ciphering algorithm of a user equipment, called UE hereinafter, to be changed during an inter-system handover (302).

5. The communications device of claim 4, **characterized in that** the inter-system handover is a handover from a GSM EDGE radio access network, known as GERAN, lu mode to a UMTS radio access network, known as UTRAN.

6. The communications device of claim 4, **characterized in that** allowing the ciphering algorithm of the UE to be changed during the inter-system handover is changing the ciphering algorithm of the UE to a first ciphering algorithm designated by a network if the first ciphering algorithm is different from the ciphering algorithm of the UE.
